# EUROPEAN PATENT SPECIFICATION

(11) **EP 3 050 912 B1**
(45) Date of publication and mention of the grant of the patent: **01.10.2025**
(21) Application number: 16153501.8
(22) Date of filing: 29.01.2016
(51) Int. Cl.: C08J 3/20, C08K 3/20, C08J 3/22

(54) **A SUBSTANTIALLY NON-INFRARED ABSORBING BLACK COLOURANT**
IM WESENTLICHEN NICHT-INFRAROT-ABSORBIERENDER SCHWARZER FARBSTOFF
COLORANT NOIR ABSORBANT SENSIBLEMENT LES RAYONS NON INFRAROUGES

(30) Priority: 29.01.2015 GB 201501463
(43) Date of publication of application: 03.08.2016
(73) Proprietor: Colour Tone Masterbatch Limited, Caerphilly, South Wales CF83 8YE (GB)
(72) Inventor: Denton, Paul, Caerphilly, South Wales CF83 8YE (GB); Gaukroger, Anthony, Caerphilly, CF83 8YE (GB)
(74) Representative: Murgitroyd & Company

(56) References cited:
- EP-A1- 1 174 460
- EP-A1- 2 860 226
- WO-A1-2011/103399
- WO-A1-2013/180267
- WO-A1-2014/095954
- WO-A1-2015/044911
- US-A1- 2009 176 928
- US-A1- 2012 282 396
- US-A1- 2014 220 335
- US-B1- 6 235 106

## Description

The present invention relates to a colourant for darkening the colour tone of a target polymer or of a colourant for addition to a polymer.

A significant problem exists with recycling of polymers and particularly plastics which are the most common waste polymeric material, whereby the cost of recycling can typically be higher than the cost of producing new plastic product. A significant part of this problem arises as a result of sorting different waste plastic into plastic types such that plastics having the same or similar compositions are separated such that they can be recycled into a satisfactory product.

Developments in the optical sorting of plastics using Near Infra Red [NIR] spectroscopy of the absorbed and reflected light from mixed plastics has enabled this method to become extremely accurate. The process has resulted in significant automation and increased throughputs in the sorting process. Typically analysing reflected NIR in the 600 - 2800 nm waveband, the technology will identify most plastics. It is even capable of differentiating between high density (HD) and low density (LD) polyethylene, and sorting flame retardant (FR) grades from mixed feed stocks. Coupling the NIR technology with optical scanning in the visual wavelengths means that clear and coloured plastics can also be automatically sorted on a commercial scale.

However, a major limitation of this process was the recognition of black and other coloured plastics that absorb IR. Traditionally black plastics are coloured with carbon black, a very good absorber of IRR, so there is no reflected NIR for analysis by the sorter. In effect the system is blinded and hence unable to identify the polymer. The same applies for other complex colours containing carbon black and/or other IR absorbing pigments. As a result mixed polymer recylate containing IR absorbing materials can only be manually sorted or disposed of as mixed plastic waste. IRR pigments can now be incorporated into the prime polymer when being initially processed to enable it to be automatically sorted by this process. End of life considerations are now becoming part of the design criteria. This is of particular interest to the packaging industry where there is more emphasis being put on the practicalities of recycling and also the electrical and automotive industries where there already is end of life legislation within the European Union.

US6235106 discloses a blue shade black pigment composition, containing iron chrome oxide wherein the ratio of iron to chromium is from about 1:1 to about 5:1 by weight.

The present invention provides a significant benefit by allowing black polymeric (typically plastic) material and coloured polymeric (typically plastic) material that includes black colourant to be sorted for recycling using IR identification techniques.

According to the present invention there is a substantially non-infrared absorbing black colourant for darkening the colour tone of a target polymer or polymer colourant as defined in claim 1.

It has been determined by the applicant that instead of using known carbon black as a colourant for darkening and often blackening the colour tone of a target polymer or target colourant, the combination of green shade and brown shade iron chrome oxide pigments together with a carrier material can be utilised to achieve the darkening of a polymer, whether as a component of a colourant for addition to downstream polymer, or whether as a colourant for direct addition to a target polymer. The use of such a colourant means that a plastic into which it has been added can be readily identified using IR or near-IR analysis. It will be appreciated that the first and second pigments are both non IR absorbent pigments.

It will be understood that 'chrome' is the accepted abbreviation, and in most case preferred terminology for chromium.

The only other commonly used technique for sorting polymeric products having black pigment therein is to manually sort using the visible identifiers that are typically embossed on the packaging. With the increased volume of waste polymeric material this is a slow, non-cost effective approach to waste recycling.

The colourant may beneficially be termed a masterbatch when in the form of a solid at room temperature and pressure. The solid is beneficially granular.

The polymer is beneficially a plastic. Household waste packaging is typically plastic and includes as example only film, natural HDPE (high-density polyethylene), natural PET (polyethylene terephthalate), coloured HDPE, coloured PET and PP (polypropylene).

The carrier material beneficially comprises a binder. The colourant is beneficially in the form of a solid at room temperature and pressure and forms a composite. The first and second pigments and carrier material are beneficially dispersed in the solid, and may be supplied for addition to a target polymer or subsequent colourant in the form of solid items such as pellets. The term colourant is used to cover at least pigments and dyes, and provides colour to a polymeric product.

The carrier material preferably comprises a polymer and is preferably selected to match or be compatible with the chemical composition of a target polymer.

It is possible that in some embodiments for use as a colourant for particular polymers it may be beneficial that the carrier comprises a liquid. The liquid may comprise a surfactant and/or a diluent. The liquid may comprise a blend of surfactants and/or diluents. Such liquids may be derivatives of sorbitan esters or polyisobutylene.

It is possible that the carrier material may comprise a wax.

The carrier material is preferably selected to match the chemical composition of a target polymer. This means that the colourant will readily mix and bond with the target polymer into which it will provide colour.

The first and second pigments are beneficially inorganic. It has been determined that inorganic first and second pigments are beneficial to ensure covering power, and also provide improved capability of a waste polymer for IR or near-IR sorting.

Green shade and brown shade iron chrome oxide pigments have been determined important rather than green or brown dyes due to poor masking performance associated with the use of dyes.

The weight percent of the first pigment in the colourant is greater than the weight percent of the second pigment in the colourant. This has been determined to provide improved darkening properties. The first pigment forms between 25 weight percent and 45 weight percent of the colourant. Even more beneficially, the first pigment forms between 30 weight percent and 40 weight percent of the colourant. The exact weight percent may be different for different colourant formulations dependent upon the polymer coloured. For example, if the colourant is to be added to a target polymer comprising polyester, the approximate weight percent of the first pigment is 33%. The carrier in this regard is beneficially PET (polyethylene terephthalate). The weight percent may be increased if the colourant is designed for addition to polypropylene.

The second pigment forms between 3 and 15 weight percent of the colourant. Preferably, the second pigment forms between 5 and 12 weight percent of the colourant. In the example as described as above where the colourant is to be added to polyester, the second pigment beneficially forms 8 weight percent of the colourant.

The carrier material may form between 40 and 60 weight percent of the colourant. In the embodiment described above the carrier material may comprise approximately 50 weight percent of the colourant.

It is further beneficial that a substantially non-infrared absorbent tinting colourant is included in the black colourant. The addition of such a tinting colourant gives improved fine control of the aesthetic appearance of the polymeric product into which the colourant has been added. It has been determined that it is beneficial that the tinting colourant is organic. This provides beneficial fine control appearance properties and is also a cost effective addition. The tinting colourant may include and/or comprise a blue pigment. For further improved appearance, the tinting colourant may comprise two or more pigments.

The tinting colourant may comprise a blend of two or more pigments. The two or more pigments may comprise and/or include blue and orange.

The tinting colourant beneficially comprises between 1 and 15 weight percent of the colourant.

The black colourant may include one or more performance enhancing additives. These may include one or more of an antioxidant, anti-static, UV stabiliser or metal deactivators.

In the event that the black colourant is solid at room temperature and pressure, such a colourant may be termed a multi-functional masterbatch.

The present invention extends to a method of manufacturing a substantially non-infrared absorbing black colourant for darkening the colour tone of a target polymer or polymer colourant as defined in claim 12.

Also according to the present invention there is a method of darkening the colour tone of a target polymer or polymer colourant as defined in claim 13.

The present invention will now be described by way of example only.

The present invention has been found to provide an effective substantially black colourant for polymeric, preferably plastic materials enabling them to be appropriately sorted for recycling after use. Generally such colourant is added in the range of less than 1% to 8% depending on the required application. Such applications can be as varied as food containers designed to be microwavable, to car interior dashboards.

The black colourant may be in a variety of forms, however is most commonly provided for use as a solid material where the carrier, green shade and brown shade solid pigments are mixed by applying a shear force and heated to cause melting of the carrier material, passed through an extruder and die, and formed into a composite solid. The solid is then cut into particles, typically pellets. This pellet colourant is then added to virgin or waste plastic for onward forming into black or substantially black products. Alternatively, the pellet colourant is added as part of a colourant mix for forming of another colourant. Such a colourant may be varied in tone, from relatively light colour tone to dark colour tone.

It is important in the present invention that after the useful life of the polymer product, recyclability is enabled. In order to achieve this using automated IR sorting techniques, the green shade pigment and brown shade pigment within the polymer material do not absorb IR radiation. As such black plastic products can be appropriately sorted automatically as the polymer can be identified, without requirement for hand sorting or transfer to landfill.

The substantially non-infrared absorbing black colourant formulations vary from the downstream polymer to which they will be added. One example is a masterbatch for polyester which is a blend of green shade iron chrome oxide of approximately 33% and brown shade iron chrome oxide of approximately 8 weight percent. In addition, a tinting colourant is also added comprising three organic pigment tinters (red, green and blue) at 10 weight percent of the total formulation. Approximately 50% of the formulation is then made up of carrier material. This makes an extremely aesthetically pleasing black where the first pigment, second pigment, carrier material and tinting colourant are dispersed in a PET or thermoplastic polyester carrier.

Also added are for example desiccants as a processing additive such as calcium oxide of approximately 3-4% and metallic soaps such as calcium stearates and/or waxes chosen dependent on the polymer into which they might be added. An example would be montan or ethylene wax dependent on polymer. The provision of a blended tinting colourant has been found to provide significant benefits in aesthetic appearance and may include a blend of red, green and blue organic pigments.

A further example is a master batch designed for polypropylene which has an increased weight percentage of green shade iron chrome oxide that utilises the same tinting colourant comprising red, blue and green organic pigments. These make ratios of the pigments making up the tinting colourant again are typically adapted dependent upon the polymer into which the colourant is to be eventually included. The carrier material, first pigment, second pigment and tinting colourant are dispersed in a polyolefin carrier.

It will be appreciated that such non-infrared absorbing black colourants may be utilised for many polymers such as polystyrene, polyethylene etc.

The reason for the different compositions of the substantially and non-infrared absorbing black colourant take into account the different base colours and optical densities of the required downstream (host) polymer. Some polymers are crystal clear whereas others are water white or even opaque. Some polymers have a strong 'off-white' base colour whereas others have minimal tint.

## Claims

1. A non-infrared absorbing black colourant for darkening the colour tone of a target polymer or polymer colourant, the black colourant being a mixture comprising a carrier material; **characterised in that** the mixture further comprises:
- a first pigment comprising green shade iron chrome oxide; and
- a second pigment comprising brown shade iron chrome oxide;
wherein the relative weight percentages of first and second pigments are selected such that in combination with the carrier material they produce a substantially black colour tone, where the first pigment forms between 25 weight percent and 45 weight percent of the colourant and the second pigment forms between 3 and 15 weight percent of the colourant.

2. A non-infrared absorbing black colourant according to claim 1 wherein the carrier material comprises a polymer.

3. A non-infrared absorbing black colourant according to any preceding claim
wherein the carrier comprises a liquid.

4. A non-infrared absorbing black colourant according to claim 1 wherein the carrier comprises a wax.

5. A non-infrared absorbing black colourant according to any preceding claim
wherein the first and second pigments are inorganic.

6. A non-infrared absorbing black colourant according to claim 1 wherein the first pigment forms between 30 weight percent and 40 weight percent of the colourant.

7. A non-infrared absorbing black colourant according to claim 1 wherein the second pigment forms between 5 and 12 weight percent of the colourant.

8. A non-infrared absorbing black colourant according to any preceding claim wherein the carrier material forms between 40 and 60 weight percent of the colourant.

9. A non-infrared absorbing black colourant according to any preceding claim including a substantially non-infrared absorbent tinting colourant; and preferably wherein the tinting colourant is organic; and preferably wherein the tinting colourant includes and/or comprises a blue pigment; and preferably wherein the tinting colourant comprises two or more pigments, wherein the two or more pigments preferably comprise and/or include blue and orange; and preferably wherein the tinting colourant comprises between 1 and 15 weight percent of the colourant.

10. A method of manufacturing a non-infrared absorbing black colourant for darkening the colour tone of a target polymer or polymer colourant, the method comprising the steps of mixing:
- a carrier material;
- a first pigment comprising green shade iron chrome oxide; and
- a second pigment comprising brown shade iron chrome oxide;
wherein the relative weight percentages of the substantially non-infrared absorbent green and brown pigments are selected such that in combination with the carrier material they produce a substantially black colour tone, where the first pigment forms between 25 weight percent and 45 weight percent of the colourant and the second pigment forms between 3 and 15 weight percent of the colourant.

11. A method of darkening the colour tone of a target polymer or polymer colourant, the method comprising the steps of adding a non-infrared absorbing colourant comprising a carrier material, a first pigment comprising green shade iron chrome oxide and a second pigment comprising brown shade iron chrome oxide to the target polymer or polymer colourant and applying heat and mixing, wherein the relative weight percentages of the substantially non-infrared absorbent green and brown pigments are selected such that in combination with the carrier material they produce a substantially black colour tone, where the first pigment forms between 25 weight percent and 45 weight percent of the colourant and the second pigment forms between 3 and 15 weight percent of the colourant.

## Patentansprüche

1. Ein nicht-infrarot-absorbierendes schwarzes Farbmittel zum Abdunkeln des Farbtons eines Zielpolymers oder Polymerfarbmittels, wobei das schwarze Farbmittel eine Mischung ist, die ein Trägermaterial beinhaltet; **dadurch gekennzeichnet, dass** die Mischung ferner Folgendes beinhaltet:
- ein erstes Pigment, das ein grünschattiertes Eisenchromoxid beinhaltet; und
- ein zweites Pigment, das ein braunschattiertes Eisenchromoxid beinhaltet;
wobei die relativen Gewichtsanteile des ersten und des zweiten Pigments so ausgewählt sind, dass sie in Kombination mit dem Trägermaterial einen im Wesentlichen schwarzen Farbton erzeugen, wobei das erste Pigment zwischen 25 Gewichtsprozent und 45 Gewichtsprozent des Farbmittels bildet und das zweite Pigment zwischen 3 und 15 Gewichtsprozent des Farbmittels bildet.

2. Nicht-infrarot-absorbierendes schwarzes Farbmittel gemäß Anspruch 1, wobei das Trägermaterial ein Polymer beinhaltet.

3. Nicht-infrarot-absorbierendes schwarzes Farbmittel gemäß einem der vorhergehenden Ansprüche, wobei der Träger eine Flüssigkeit beinhaltet.

4. Nicht-infrarot-absorbierendes schwarzes Farbmittel gemäß Anspruch 1, wobei der Träger ein Wachs beinhaltet.

5. Nicht-infrarot-absorbierendes schwarzes Farbmittel gemäß einem der vorhergehenden Ansprüche, wobei das erste und zweite Pigment anorganisch sind.

6. Nicht-infrarot-absorbierendes schwarzes Farbmittel gemäß Anspruch 1, wobei das erste Pigment zwischen 30 Gewichtsprozent und 40 Gewichtsprozent des Farbmittels bildet.

7. Nicht-infrarot-absorbierendes schwarzes Farbmittel gemäß Anspruch 1, wobei das zweite Pigment zwischen 5 und 12 Gewichtsprozent des Farbmittels bildet.

8. Nicht-infrarot-absorbierendes schwarzes Farbmittel gemäß einem der vorhergehenden Ansprüche, wobei das Trägermaterial zwischen 40 und 60 Gewichtsprozent des Farbmittels bildet.

9. Nicht-infrarot-absorbierendes schwarzes Farbmittel gemäß einem der vorhergehenden Ansprüche, umfassend ein im Wesentlichen nicht-infrarot-absorbierendes Abtönfarbmittel; und wobei das Abtönfarbmittel vorzugsweise organisch ist; und wobei das Abtönfarbmittel vorzugsweise ein blaues Pigment umfasst und/oder beinhaltet; und wobei das Abtönfarbmittel vorzugsweise zwei oder mehr Pigmente beinhaltet, wobei die zwei oder mehr Pigmente vorzugsweise blau und orange beinhalten und/oder umfassen; und wobei das Abtönfarbmittel vorzugsweise zu zwischen 1 und 15 Gewichtsprozent das Farbmittel beinhaltet.

10. Ein Verfahren zum Herstellen eines nicht-infrarot-absorbierenden schwarzen Farbmittels zum Abdunkeln des Farbtons eines Zielpolymers oder Polymerfarbmittels, wobei das Verfahren die Schritte des Mischens von Folgendem beinhaltet:
- einem Trägermaterial;
- einem ersten Pigment, das ein grünschattiertes Eisenchromoxid beinhaltet; und
- einem zweiten Pigment, das ein braunschattiertes Eisenchromoxid beinhaltet;
wobei die relativen Gewichtsanteile der im Wesentlichen nicht-infrarot-absorbierenden grünen und braunen Pigmente so ausgewählt sind, dass sie in Kombination mit dem Trägermaterial einen im Wesentlichen schwarzen Farbton erzeugen, wobei das erste Pigment zwischen 25 Gewichtsprozent und 45 Gewichtsprozent des Farbmittels bildet und das zweite Pigment zwischen 3 und 15 Gewichtsprozent des Farbmittels bildet.

11. Ein Verfahren zum Abdunkeln des Farbtons eines Zielpolymers oder Polymerfarbmittels, wobei das Verfahren die folgenden Schritte beinhaltet: Hinzufügen eines nicht-infrarot-absorbierenden Farbmittels, beinhaltend ein Trägermaterial, ein erstes Pigment, das ein grünschattiertes Eisenchromoxid beinhaltet, und ein zweites Pigment, das ein braunschattiertes Eisenchromoxid beinhaltet, zu dem Zielpolymer oder Polymerfarbmittel und Anwenden von Wärme und Mischen, wobei die relativen Gewichtsanteile der im Wesentlichen nicht-infrarot-absorbierenden grünen und braunen Pigmente so ausgewählt sind, dass sie in Kombination mit dem Trägermaterial einen im Wesentlichen schwarzen Farbton erzeugen, wobei das erste Pigment zwischen 25 Gewichtsprozent und 45 Gewichtsprozent des Farbmittels bildet und das zweite Pigment zwischen 3 und 15 Gewichtsprozent des Farbmittels bildet.

## Revendications

1. Un colorant noir absorbant les rayons non infrarouges pour assombrir le ton de couleur d'un polymère cible ou colorant de polymère, le colorant noir étant un mélange comprenant un matériau support ; **caractérisé en ce que** le mélange comprend en outre :
- un premier pigment comprenant de l'oxyde de fer chromé de teinte verte ; et
- un deuxième pigment comprenant de l'oxyde de fer chromé de teinte marron ;
dans lequel les pourcentages en poids relatifs des premier et deuxième pigments sont sélectionnés de telle sorte que, en combinaison avec le matériau support, ils produisent un ton de couleur substantiellement noir, où le premier pigment forme entre 25 pour cent en poids et 45 pour cent en poids du colorant et le deuxième pigment forme entre 3 et 15 pour cent en poids du colorant.

2. Un colorant noir absorbant les rayons non infrarouges selon la revendication 1 dans lequel le matériau support comprend un polymère.

3. Un colorant noir absorbant les rayons non infrarouges selon n'importe quelle revendication précédente dans lequel le support comprend un liquide.

4. Un colorant noir absorbant les rayons non infrarouges selon la revendication 1 dans lequel le support comprend une cire.

5. Un colorant noir absorbant les rayons non infrarouges selon n'importe quelle revendication précédente dans lequel les premier et deuxième pigments sont inorganiques.

6. Un colorant noir absorbant les rayons non infrarouges selon la revendication 1 dans lequel le premier pigment forme entre 30 pour cent en poids et 40 pour cent en poids du colorant.

7. Un colorant noir absorbant les rayons non infrarouges selon la revendication 1 dans lequel le deuxième pigment forme entre 5 et 12 pour cent en poids du colorant.

8. Un colorant noir absorbant les rayons non infrarouges selon n'importe quelle revendication précédente dans lequel le matériau support forme entre 40 et 60 pour cent en poids du colorant.

9. Un colorant noir absorbant les rayons non infrarouges selon n'importe quelle revendication précédente incluant un colorant de nuançage absorbant substantiellement les rayons non infrarouges ; et de préférence dans lequel le colorant de nuançage est organique ; et de préférence dans lequel le colorant de nuançage inclut et/ou comprend un pigment bleu ; et de préférence dans lequel le colorant de nuançage comprend deux pigments ou plus, les deux pigments ou plus comprenant et/ou incluant de préférence le bleu et l'orange ; et de préférence dans lequel le colorant de nuançage comprend entre 1 et 15 pour cent en poids du colorant.

10. Un procédé de fabrication d'un colorant noir absorbant les rayons non infrarouges pour assombrir le ton de couleur d'un polymère cible ou colorant polymère, le procédé comprenant les étapes consistant à mélanger :
- un matériau support ;
- un premier pigment comprenant de l'oxyde de fer chromé de teinte verte ; et
- un deuxième pigment comprenant de l'oxyde de fer chromé de teinte marron ;
dans lequel les pourcentages en poids relatifs des pigments vert et marron absorbant substantiellement les rayons non infrarouges sont sélectionnés de telle sorte que, en combinaison avec le matériau support, ils produisent un ton de couleur substantiellement noir, où le premier pigment forme entre 25 pour cent en poids et 45 pour cent en poids du colorant et le deuxième pigment forme entre 3 et 15 pour cent en poids du colorant.

11. Un procédé d'assombrissement du ton de couleur d'un polymère cible ou colorant polymère, le procédé comprenant les étapes consistant à ajouter un colorant absorbant les rayons non infrarouges comprenant un matériau support, un premier pigment comprenant de l'oxyde de fer chromé de teinte verte et un deuxième pigment comprenant de l'oxyde de fer chromé de teinte marron au polymère cible ou colorant polymère et à appliquer de la chaleur et à mélanger, les pourcentages en poids relatifs des pigments vert et marron absorbant substantiellement les rayons non infrarouges étant sélectionnés de telle sorte que, en combinaison avec le matériau support, ils produisent un ton de couleur substantiellement noir, où le premier pigment forme entre 25 pour cent en poids et 45 pour cent en poids du colorant et le deuxième pigment forme entre 3 et 15 pour cent en poids du colorant.
